# EUROPÄISCHE PATENTSCHRIFT

(11) **EP 1 900 569 B1**
(45) Veröffentlichungstag und Bekanntmachung des Hinweises auf die Patenterteilung: **05.03.2014**
(21) Anmeldenummer: 07018283.7
(22) Anmeldetag: 18.09.2007
(51) Int. Cl.: B60P 7/08

(54) **Ratschenanordnung zum Spannen aufwickelbarer Gegenstände**
Ratchet device for tensioning coilable objects
Dispositif à rochet pour étirer des objets pouvant être enroulés

(30) Priorität: 18.09.2006 DE 102006044403
(43) Veröffentlichungstag der Anmeldung: 19.03.2008
(73) Patentinhaber: F. HESTERBERG & SÖHNE GmbH & Co. KG, 58256 Ennepetal (DE)
(72) Erfinder: Alberth, Günter, 94036 Passau (DE); Feinbier, Joachim, Dipl.-Ing., 58256 Ennepetal (DE); Klein, Claus-Jürgen, 58332 Schwelm (DE)
(74) Vertreter: Christophersen & Partner

(56) Entgegenhaltungen:
- EP-A1- 0 085 965
- EP-A1- 1 223 078
- EP-A2- 1 642 683
- WO-A1-2006/001714

## Beschreibung

Die Erfindung betrifft eine Ratschenanordnung zum Spannen aufwickelbarer Gegenstände, mit einem ein gezahntes Ratschenrad drehbar lagernden Basisteil, einem auf derselben Drehachse wie das Ratschenrad schwenkbar zu dem Basisteil gelagerten Handhebel, einem an die Zahnung des Ratschenrades angepassten Klinkenmechanismus bestehend aus einer Mitnahmeklinke an dem Handhebel und einer Sperrklinke an dem Basisteil, und einem zwischen einer Grundstellung und mindestens einer Entriegelstellung beweglich an dem Handhebel gelagerten Riegel, welcher den Handhebel in der Grundstellung formschlüssig an dem Basisteil verriegelt, und in der Entriegelstellung frei gibt.

Eine solche Ratschenanordnung ist aus der DE 10 2004 059 339 EP 1642683 bekannt. Sie wird verwendet, um mittels eines aufwickelbaren Gurtes oder eines anderen aufwickelbaren Zugelementes z.B. das Frachtgut eines Lastkraftwagens durch Verzurren gegen ein Verrutschen auf der Fahrzeugladefläche zu sichern. Des weiteren werden solche Ratschenanordnungen auch verwendet, um beispielsweise die Seitenplanen eines Lastkraftwagens mittels an diesen Planen befestigter Gurte zu spannen.

An einem Basisteil, welches an der Fahrzeugkarosserie befestigt ist, ist auf derselben Achse sowohl ein als Spannelement dienendes Ratschenrad drehbar, als auch ein Handhebel schwenkbar gelagert. Dem Antrieb des Ratschenrades dient ein Klinkenmechanismus aus einer Mitnahmeklinke an dem Handhebel und einer Sperrklinke an dem Basisteil. Durch Hin- und Herschwenken des Handhebels lässt sich auf diese Weise das Ratschenrad antreiben und damit der Spannvorgang durchführen. Desweiteren ist in die bekannte Ratschenanordnung ein Mechanismus zum Aufheben der Spannkraft integriert. Hierzu muss ein schwenkbar an dem Handhebel gelagerter Riegel betätigt werden, und zugleich der Handhebel in eine weit geöffnete Schwenklage von bis zu 115 ° bewegt werden. Dabei kommt es zu einer mechanischen Entriegelung der Sperrklinke und einer Freilauffunktion des Ratschenrades.

Da zum Aufheben der Spannkraft der Handhebel sehr weit verschwenkt werden muss, sind die Einsatzmöglichkeiten der Ratschenanordnung nach der DE 10 2004 059 339 A1 EP 1642683 beschränkt. Bei beengten räumlichen Verhältnissen, welche ein vollständiges Aufschwenken des Handhebels nicht zulassen, ist das sichere Aufheben der Spannkraft nicht immer gewährleistet.

Ziel der Erfindung ist es, auch bei beengten räumlichen Verhältnissen ein sicheres Aufheben der Spannkraft zu ermöglichen.

Zur **Lösung** wird bei einer Ratschenanordnung mit den eingangs angegebenen Merkmalen vorgeschlagen, dass der Riegel zusätzlich zu Grund- und Entriegelstellung in eine Freilaufstellung beweglich gestaltet ist, in welcher ein an dem Riegel ausgebildetes Druckelement die Sperrklinke außer Eingriff in das Ratschenrad hält.

Das Aufheben der Spannkraft erfolgt daher nicht durch ein weites Öffnen des Spannhebels, sondern durch ein Schließen des Handhebels - allerdings bei gleichzeitiger Betätigung des in dem Handhebel gelagerten Riegels. Auf diese Weise ist auch im Falle beengter räumlicher Verhältnisse, welche ein weites Öffnen des Handhebels nicht zulassen, ein sicheres Aufheben der Spannkraft möglich.

Ausgestaltungen der Ratschenanordnung sehen vor, dass die Sperrklinke schwenkbeweglich an dem Basisteil gelagert ist, und dass die Mitnahmeklinke schwenkbeweglich an dem Handhebel gelagert ist. Eine besonders vorteilhafte Ausgestaltung ist gekennzeichnet durch ein an einer der beiden Klinken ausgebildetes Mitnehmerelement, welches in der Außereingriffstellung der einen Klinke auch die andere Klinke außer Eingriff in das Ratschenrad hält. Dies führt zu einer baulichen Vereinfachung, da durch das Aufheben der Sperrwirkung der einen Klinke zugleich auch die andere Klinke ihren Eingriff in das Ratschenrad verliert. Mit anderen Worten: Die eine Klinke nimmt die andere mit, und auf getrennte Betätigungsmittel kann verzichtet werden.

Vorzugsweise ist das Mitnehmerelement eine an der Sperrklinke ausgebildete Kontur, welche an den mit der Zahnung des Ratschenrades zusammenwirkenden Klinkenvorsprung der Sperrklinke angrenzt.

Eine weitere besonders vorteilhafte Ausgestaltung der Ratschenanordnung ist durch Rückhaltemittel gekennzeichnet, welche den Riegel bei geschlossenem Handhebel in seiner Freilaufstellung blockieren. Ist daher der Freilauf des Ratschenrades und damit das Aufheben der Spannkraft einmal eingestellt, bedarf es zur weiteren Aufrechterhaltung des Freilaufs keiner Dauerbetätigung des Riegels mehr. Vielmehr reicht allein die Schließstellung des Handhebels aus, um den Freilauf aufrecht zu erhalten. Die Bedienperson hat also beide Hände für andere Handgriffe frei.

Die beschriebenen Rückhaltemittel bestehen vorzugsweise aus sich in Bewegungsrichtung des Riegels gegenseitig hintergreifenden Vorsprüngen an Sperrklinke und Riegel.

Mit einer weiteren Ausgestaltung der Ratschenanordnung wird vorgeschlagen, dass der Riegel zur Verriegelung des Handhebels mit einem eine Sperrfläche des Basisteils hintergreifenden Sperrhaken versehen ist, und dass der Sperrhaken der Sperrfläche abgewandt mit einer Einführschräge versehen ist. Diese Lösung bietet den Vorteil eines vereinfachten Schließens des Handhebels nach der Spannarbeit. Dieser muss lediglich in Richtung auf das Basisteil angedrückt werden, wobei der Sperrhaken aufgrund seiner Einführschräge zurückweicht und anschließend hinter der Sperrfläche verriegelt. Eine willensbetonte Betätigung des Riegels ist daher für das Schließen des Handhebels nicht notwendig.

Schließlich ist eine weitere Ausgestaltung der Ratschenanordnung gekennzeichnet durch eine in dem Handhebel nahe eines daran ausgebildeten Handgriffs angeordnete Betätigungstaste für den Riegel. Bei einer Ausführungsform ist vorgesehen, dass die Betätigungstaste schwenkbeweglich mit dem Riegel verbunden und zugleich an dem Handhebel längsgeführt ist.

Weitere Einzelheiten und Vorteile ergeben sich aus der nachfolgenden Beschreibung eines Ausführungsbeispiels und unter Bezugnahme auf die beigefügten Zeichnungen. Darin zeigen:
- Fig. 1: in perspektivischer Darstellung eine Spannvorrichtung zum Spannen von Gurten und Planen;
- Fig. 2: die Spannvorrichtung in einem Längsschnitt;
- Fig. 3: einen Längsschnitt bei betätigtem Riegel;
- Fig. 4: einen Längsschnitt während des Spannvorgangs und bei leicht aus dem Basisteil angewinkeltem Handhebel;
- Fig. 5: einen Längsschnitt während des Spannvorgangs und bei stärker zu dem Basisteil angewinkeltem Handhebel;
- Fig. 6: einen Längsschnitt in der Freigabe - bzw. Freilaufstellung;
- Fig. 7: eine zweite Ausführungsform der Ratschenspannvorrichtung, wiederum im Längsschnitt;
- Fig. 8: eine dritte Ausführungsform der Ratschenspannvorrichtung, wiederum im Längsschnitt und dargestellt bei unbetätigtem Riegel, und
- Fig.9: die Ratschenspannvorrichtung nach Fig. 8 in der Freigabe- bzw.
Freilaufstellung.

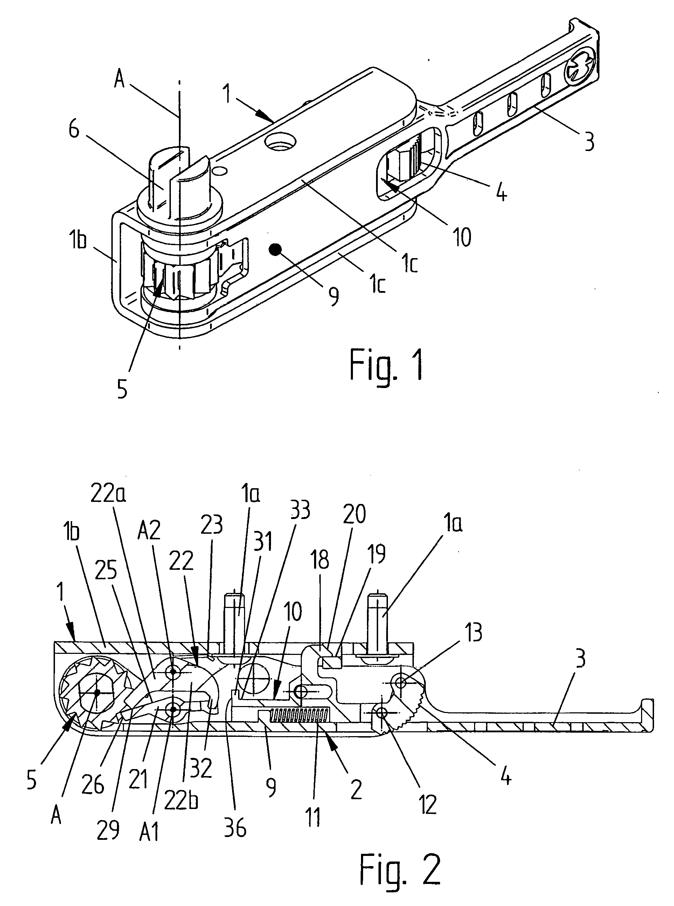

Die Fign. 1 und 2 zeigen eine Ratschenspannvorrichtung in ihrer Grundstellung. Ein Basisteil 1 ist mittels mehrerer Schrauben 1 a an einem Fahrzeugaufbau befestigt. Das Basisteil 1 besteht aus einer Grundplatte 1b und zwei dazu rechtwinklingen Seitenwänden 1 c. Schwenkbar in Bezug auf eine Drehachse A ist an dem Basisteil 1 ein Handhebel 2 gelagert, welcher an seinem anderen Ende einen Handgriff 3 aufweist. Nahe des Handgriffs 3 befindet sich in dem Handhebel eine Betätigungstaste 4.

Ebenfalls auf der Drehachse A gelagert ist ein mit einer Außenverzahnung versehenes Ratschenrad 5. Das Ratschenrad 5 ist aus dem Basisteil 1 heraus verlängert und weist dort einen Schlitz 6 oder auch einen als Antrieb dienenden Mehrkant auf. Der Schlitz oder Mehrkant dient dazu, dort einen wickelfähigen Gegenstand aufzuwickeln, etwa einen Spanngurt oder eine aufzuwickelnde Plane. Zur Verwirklichung der Wickel-Drehachse A sind die Seitenwände 1 c mit Bohrungen versehen, in denen das Ratschenrad 5 gelagert ist. Auf derselben Drehachse A, jedoch unabhängig von dem Ratschenrad 5, erfolgt die Schwenklagerung des Handhebels 2.

In dem Handhebel 2 ist, verdeckt durch dessen Außenwand 9, ein Riegel 10 längsbeweglich gelagert. In dieser Längsrichtung ist der Riegel 10 durch eine andererseits an einer Fläche des Handhebels 2 anliegende Feder 11 beaufschlagt. Die Feder 11 drückt den Riegel 10 in Richtung zu dem Handgriff 3 bzw. zu der Betätigungstaste 4 hin.

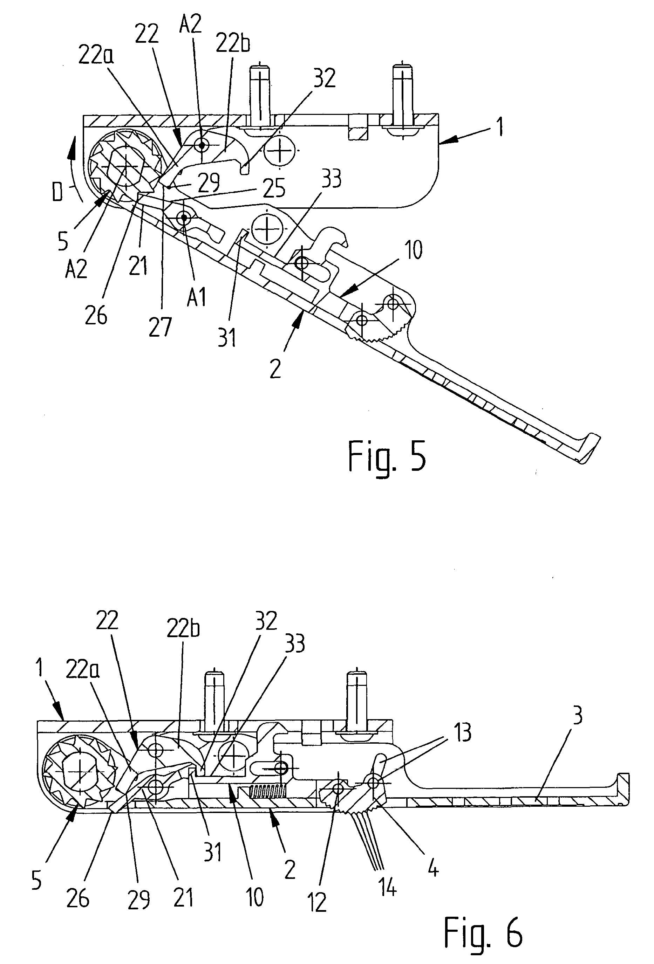

Die Betätigungstaste 4 für den Riegel 10 ist als Doppelgelenktaste ausgestaltet. Sie ist über ein Gelenk 12 schwenkbeweglich mit dem Riegel 10 verbunden, zugleich ist ihr anderes Ende, wie vor allem Fig. 6 erkennen lässt, bei 13 in dem Handhebel 2 geführt. Die Führung 13 ist hier eine Langlochführung mit schräger Anordnung des Langlochs. Für eine kraftvolle Bedienung der Betätigungstaste 4 ist diese Gestaltung als Doppelgelenk von Vorteil, da zu einem Längsverschieben des Riegels 10 die Betätigungstaste 4 zugleich geschoben und geschwenkt wird, und sich höhere Betätigungskräfte aufbringen lassen. Zudem wird die Betätigung durch eine außen aufgebrachte Riffelung 14 verbessert.

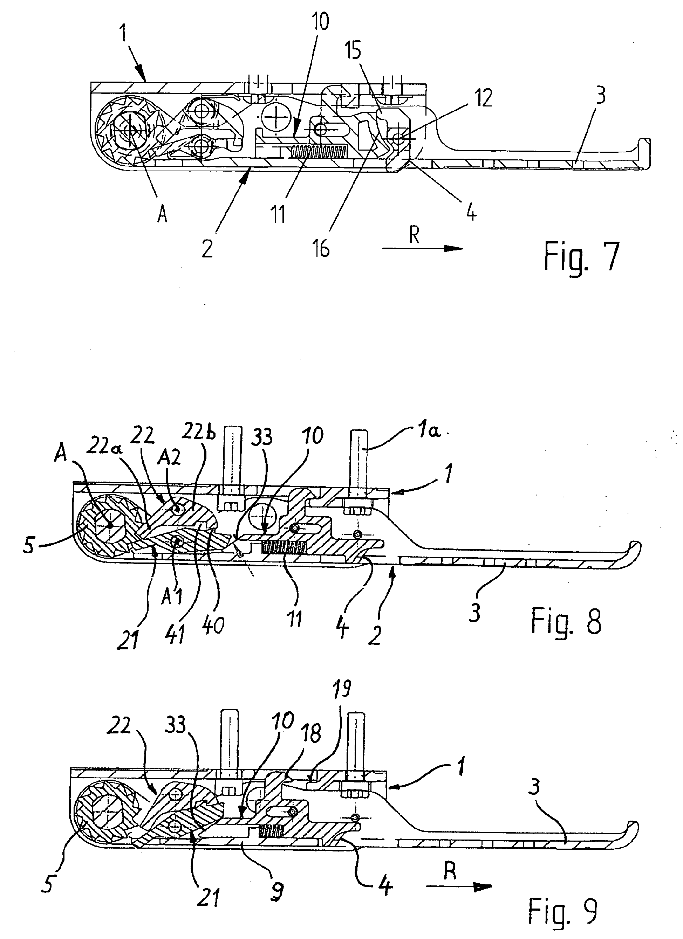

Fig. 7 zeigt bei einer zweiten Ausführungsform eine alternative Betätigung des Riegels 10. Die Betätigungstaste 4 ist in diesem Fall als Wippe gestaltet und ihr Außenarm muss, um den Riegel 10 entgegen der Kraft der Feder 11 zu verschieben, in Richtung R angezogen werden. Am anderen Arm der Wippe befindet sich ein Nocken 15, welcher an der Fläche 16 des Riegels 10 entlang gleitet und auf diese Weise den Riegel 10 von dem Handgriff 3 weg vorantreibt. Im übrigen jedoch ist die Ausführungsform nach Fig. 7 ebenso gestaltet, wie die erste Ausführungsform nach den Fign. 1 bis 6.

Gemäß Fig. 2 befindet sich an dem längsgeführten Riegel 10 ein Sperrhaken 18, welcher bei verriegeltem Handhebel eine an dem Basisteil 1 ausgebildete Sperrfläche 19 hintergreift. Bei der Sperrfläche 19 handelt es sich um einen Steg, welcher durch Umformen des entsprechenden Bereiches der Grundplatte 1 b hergestellt ist.

Der Sperrfläche 19 abgewandt ist der Sperrhaken 18 mit einer Einführschräge 20 versehen. Diese weist eine solche Neigung und Erstreckung auf, dass, wenn der zunächst geöffnete Handhebel 2 wieder in das Basisteil 1 zurück verschwenkt wird, der Riegel durch die Sperrfläche 19 und entgegen der Kraft der Feder 11 zurück gedrückt wird, und anschließend hinter der Sperrfläche 19 einschnappt. Zum Schließen des Handhebels 2 ist es daher ausreichend, den Handhebel 2 einfach gegen das Basisteil 1 anzudrücken.

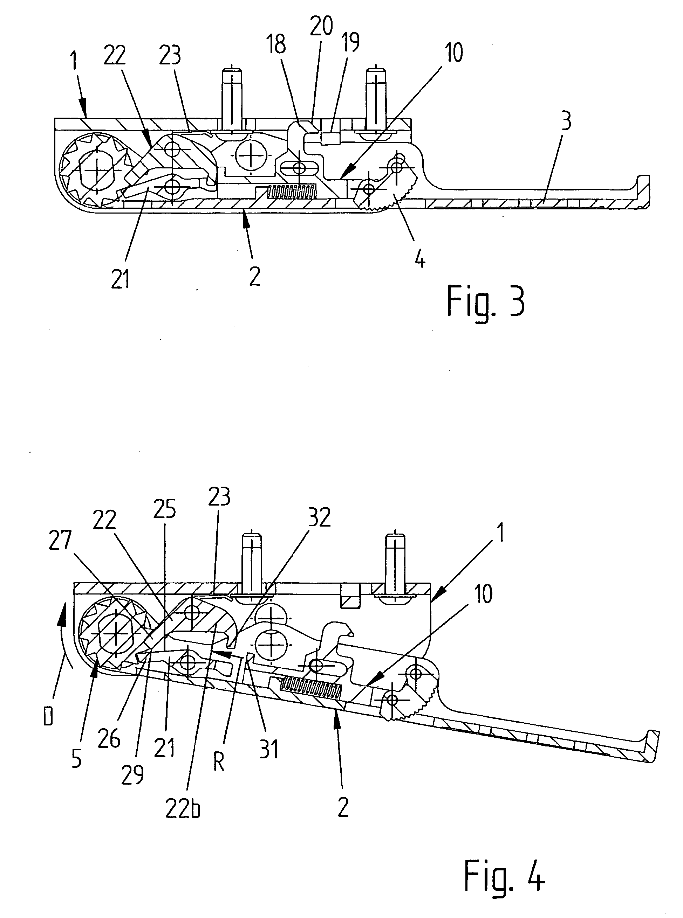

Nahe zu dem Ratschenrad 5 ist in dem Handhebel 2 auf einer Achse A1 eine Mitnahmeklinke 21 schwenkbar gelagert. Ebenfalls nahe zu dem Ratschenrad 5 ist in dem Basisteil 1 auf einer Achse A2 eine Sperrklinke 22 schwenkbar gelagert. Die Achsen A1, A2 verlaufen parallel zueinander und parallel zu der Drehachse A des Ratschenrades 5. Die Mitnahmeklinke 21 und die Sperrklinke 22 sind jeweils mit einer Feder 23 versehen, welche bestrebt ist, die Klinkenvorsprünge 26, 27 (Fig. 4) gegen die Verzahnung des Ratschenrades 5 anzudrücken. Aus Gründen der Übersicht ist auf der Zeichnung nur die Feder 23 der gehäusefesten Sperrklinke 22 dargestellt.

Die Mitnahmeklinke 21 weist eine Außenseite 25 auf sowie den Klinkenvorsprung 26, dessen Gestalt in der Weise an die Zahnkontur des Ratschenrades 5 angepasst, dass die Mitnahmeklinke 21 mit dem Klinkenvorsprung 26 das Ratschenrad 5 in Drehrichtung D anzutreiben vermag, wenn der Handhebel 2 gemäß Fig. 4 und Fig. 5 aufgeschwenkt wird. Der Eingriff der Mitnahmeklinke 21 in das Ratschenrad 5 erfolgt also dann, wenn der Handhebel 2 nach außen von dem Basisteil 1 weggeschwenkt wird.

Hingegen greift die an dem Basisteil 1 gelagerte Sperrklinke 22 dann ein, wenn der Handhebel 2 wieder zurück in Richtung auf das Basisteil 1 geschwenkt wird. Fig. 4 zeigt, wie in diesem Fall der Klinkenvorsprung 27 der Sperrklinke 22 das Ratschenrad 5 gegen ein Zurückdrehen entgegen der Drehrichtung D sperrt bzw. blockiert. Durch wechselweises Hin- und Herschwenken des Handhebels 2 wird also das Ratschenrad 5 sukzessive in Drehrichtung D angetrieben, um so den Spannvorgang durchzuführen.

Die Sperrklinke 22 ist wippenförmig mit zwei Klinkenarmen 22a, 22b gestaltet. Nahe ihres Klinkenvorsprungs 27 befindet sich am Klinkenarm 22a der Sperrklinke ein Mitnehmerelement 29, hier als Eckenkontur ausgebildet. Bei einem entsprechenden Verschwenken der Sperrklinke 22 stößt das Mitnehmerelement 29 gegen die Außenseite 25 der Mitnahmeklinke 21, wodurch die Sperrklinke 22 die Mitnahmeklinke 21 mitnimmt, und beide Klinken 21, 22 zugleich den Eingriff in das Ratschenrad 5 verlieren. Diese Funktion wird nun näher erläutert.

Die Fig. 4 zeigt den Handhebel 2 in leicht geöffneter Stellung, wodurch der federbelastete Riegel 10 durch Nichtbetätigung der Betätigungstaste 4 in seiner Normalstellung sitzt. Wird in dieser Stellung der Riegel 10 in Richtung R ganz vorgeschoben, so gelangt ein an dem Riegel 10 ausgebildeter Vorsprung 31 bis unter und hinter einen Vorsprung 32, welcher am Klinkenarm 22b der Sperrklinke 22 ausgebildet ist. Der Vorsprung 31 ist an dem Riegel 10 zu dem Basisteil 1 hin, und der Vorsprung 32 an der Sperrklinke 22 zu dem Handhebel 2 hin gerichtet. Zudem befindet sich der Vorsprung 32 an jenem Arm 22b der wippenförmig gestalteten Sperrklinke 22, welcher dem Klinkenvorsprung 27 der Sperrklinke 22 abgewandt ist. Dies hat zur Folge, dass nach Schließen des Handhebels die Vorsprünge 31, 32 einander hintergreifen, und auf diese Weise der Riegel 10 in seiner am weitesten vorgeschobenen Stellung durch die Sperrklinke 22 arretiert wird. Selbst wenn jetzt die Betätigungstaste 4 losgelassen wird, verharrt der Riegel 10 in der so eingenommenen und in Fig. 6 dargestellten Freilaufstellung. In dieser Stellung ist der Riegel 10 daher noch weiter vorgeschoben, als für die bloße Entriegelung des Riegels 10 (Fig. 3) erforderlich.

Nur bei angewinkeltem Handhebel 2 wie z.B. in Fig. 4 dargestellt, kann durch entsprechendes Verschieben des Riegels 10 dessen Vorsprung 31 bis hinter den Vorsprung 32 verfahren werden.

Hingegen lässt sich der Riegel aus seiner Grundstellung (Fig. 2) nicht bis in seine Freilaufstellung (Fig. 6) bewegen. Denn in diesem Fall stößt ein an dem Riegel 10 ausgebildeter Endbereich 36, an dem sich auch der Vorsprung 31 befindet, von außen gegen die Sperrklinke 22 bzw. gegen den daran ausgebildeten Vorsprung 32. Dieses Anstoßen ist in Fig. 3 dargestellt. Aus der Grundstellung nach Fig. 2 lässt sich der Riegel 10 daher höchstens bis in die Entriegelstellung Fig. 3 verschieben, und nicht bis in die Freilaufstellung Fig. 6.

In der Freilaufstellung (Fig. 6) drückt der Riegel 10 bei 33 so gegen den Klinkenarm 22b, dass die Sperrklinke 22 außer Eingriff mit dem Ratschenrad 5 gelangt. Zugleich nimmt, wie bereits beschrieben, das Mitnehmerelement 29 des Klinkenarms 22a die Mitnahmeklinke 21 mit, wodurch diese ebenfalls von dem Ratschenrad 5 wegdreht und den Eingriff in das Ratschenrad verliert. Auf diese Weise wird das Ratschenrad 5 frei beweglich im Sinne eines Freilaufs. Für die Freilaufbetätigung der Klinken 22, 21 ist der Riegel mit einem geeigneten Druckelement 33 versehen. Das Druckelement 33 ist hier eine Fläche an dem Riegel 10, gegen die der Kllinkenarm 22b stößt, wodurch die Sperrklinke 22 verschwenkt.

In den Figuren 8 und 9 ist eine weitere Ausführungsformel der Ratschenanordnung dargestellt. Wiederum verfügt auch diese Ausführungsform über das Ratschenrad 5, die auf der Achse A2 im Basisteil 1 gelagerte Sperrklinke 22, die auf der Achse A1 an dem Handhebel 2 gelagerte Mitnahmeklinke 21, und den längs verschieblich in dem Handhebel 2 geführten Riegel 10. Abweichend gegenüber den vorangegangenen Ausführungsbeispielen ist die Gestaltung des an dem Riegel 10 ausgebildeten Druckelements 33. Als Druckelement 33 dient hier eine Rampe, welche beim Vorschieben des Riegels 10 unter den rückwärtigen Arm der wippenförmigen Mitnahmeklinke 21 gelangt. Bei Betätigung des Riegels 10 aus der in Figur 8 dargestellten Grundstellung in die in Figur 9 dargestellte Freilaufstellung drückt das rampenförmige Druckelement 33 unmittelbar gegen die Mitnahmeklinke 21, welche ihrerseits unter Mitnahme der Sperrklinke 22 gegen die Sperrklinke bewegbar ist, und so die Sperrklinke 22 außer Eingriff in das Ratschenrad 5 hält. Zugleich wird auch die Mitnahmeklinke 21 außer Eingriff in das Ratschenrad 5 gehalten.

Bei dieser Ausführungsform wirkt daher der Riegel 10 nur mittelbar auf die Sperrklinke 22, um diese außer Eingriff in das Ratschenrad 5 zu halten. Zur Erzielung der Freilaufstellung beider Klinken nimmt nicht die Sperrklinke die Mitnahmeklinke mit, sondern die Mitnahmeklinke 21 nimmt die Sperrklinke 22 mit. Hierzu stößt der dem Ratschenrad 5 abgewandte Klinkenarm der Mitnahmeklinke 21 gegen den Klinkenarm 22 b der Sperrklinke 22. In dem Bereich dieser Mitnahme ist an der Mitnahmeklinke 21 ein Vorsprung 40 und an dem Klinkenarm 22 b der Sperrklinke 22 eine Ausnehmung 41 ausgebildet. Sobald durch entsprechendes Vorschieben des Riegels 10 der Freilauf eingeschaltet ist, wie in Figur 9 dargestellt, kommt es zu einem formschlüssigen Eingreifen des Vorsprungs 40 in die Ausnehmung 41. Die beiden Klinken 21, 22 blockieren sich auf diese Weise gegenseitig in der Freilaufstellung, wobei dieses Blockieren auch aufrechterhalten bleibt, wenn der Riegel 10 losgelassen wird und infolge der Kraft der Feder 11 wieder in seine Grundstellung zurückgelangt. Zum Aufheben der in Figur 9 skizzierten Blockierung der beiden Klinken 21, 22 ist es vielmehr erforderlich, den Handhebel 2 insgesamt etwas zu öffnen. Hierdurch entfernt sich die auf der Klinkenachse A1 gelagerte Mitnahmeklinke 21 von der Sperrklinke 22, wodurch sich der Hintergriff zwischen Vorsprung 40 und Ausnehmung 41 selbsttätig löst. Der Freilauf ist wieder ausgeschaltet.

### Bezugszeichenliste

- 1: Basisteil
- 1a: Schraube
- 1 b: Grundplatte
- 1 c: Seitenwand
- 2: Handhebel
- 3: Handgriff
- 4: Betätigungstaste
- 5: Ratschenrad
- 6: Schlitz
- 9: Außenwand
- 10: Riegel
- 11: Feder
- 12: Gelenk
- 13: Führung
- 14: Riffelung
- 15: Nocken
- 16: Fläche
- 18: Sperrhaken
- 19: Sperrfläche
- 20: Einführschräge
- 21: Mitnahmeklinke
- 22: Sperrklinke
- 22a: Klinkenarm
- 22b: Klinkenarm
- 23: Feder
- 25: Außenseite
- 26: Klinkenvorsprung
- 27: Klinkenvorsprung
- 29: Mitnehmerelement
- 31: Vorsprung
- 32: Vorsprung
- 33: Druckelement
- 36: Endbereich
- 40: Vorsprung
- 41: Ausnehmung
- A: Drehachse
- A1: Achse
- A2: Achse
- D: Drehrichtung
- R: Richtung

## Patentansprüche

1. Ratschenanordung zum Spannen aufwickelbarer Gegenstände, mit einem ein gezahntes Ratschenrad (5) drehbar lagernden Basisteil (1), einem auf derselben Drehachse (A) wie das Ratschenrad (5) schwenkbar zu dem Basisteil (1) gelagerten Handhebel (2), einem an die Zahnung des Ratschenrades (5) angepassten Klinkenmechanismus bestehend aus einer Mitnahmeklinke (21) an dem Handhebel (2) und einer Sperrklinke (22) an dem Basisteil (1), und einem zwischen einer Grundstellung und mindestens einer Entriegelstellung beweglich an dem Handhebel (2) gelagerten Riegel (10), welcher den Handhebel (2) in der Grundstellung formschlüssig an dem Basisteil (1) verriegelt, und in der Entriegelstellung freigibt,
**dadurch gekennzeichnet,**
**dass** der Riegel (10) zusätzlich zu Grund- und Entriegelstellung in eine Freilaufstellung beweglich gestaltet ist, in welcher ein an dem Riegel (10) ausgebildetes Druckelement (33) die Sperrklinke (22) außer Eingriff in das Ratschenrad (5) hält.

2. Ratschenanordnung nach Anspruch 1, **dadurch gekennzeichnet, dass** in der Freilaufstellung das Druckelement (33) des Riegels (10) auch die Mitnahmeklinke (21) außer Eingriff in das Ratschenrad (5) hält.

3. Ratschenanordnung nach Anspruch 1 oder 2, **dadurch gekennzeichnet, dass** in der Freilaufstellung das Druckelement (33) unmittelbar gegen die Sperrklinke (22) drückt und diese so außer Eingriff in das Ratschenrad (5) hält.

4. Ratschenanordnung nach Anspruch 1 oder 2, **dadurch gekennzeichnet, dass** in der Freilaufstellung das Druckelement (33) gegen die Mitnahmeklinke (21) drückt, welche ihrerseits unter Mitnahme der Sperrklinke (22) gegen die Sperrklinke (22) bewegbar ist, und diese so außer Eingriff in das Ratschenrad (5) hält.

5. Ratschenanordnung nach einem der vorangehenden Ansprüche, **dadurch gekennzeichnet, dass** die Sperrklinke (22) schwenkbeweglich an dem Basisteil (1), und die Mitnahmeklinke (21) schenkbeweglich an dem Handhebel (2) gelagert ist.

6. Ratschenanordnung nach einem der vorangehenden Ansprüche, **gekennzeichnet durch** ein an einer der beiden Klinken (22, 21) ausgebildetes Mitnehmerelement, welches in der Außereingriffstellung der einen Klinke (22 bzw. 21) auch die andere Klinke (21 bzw. 22) außer Eingriff in das Ratschenrad (5) hält.

7. Ratschenanordnung nach Anspruch 6, **dadurch gekennzeichnet, dass** das Mitnehmerelement (29) eine an der Sperrklinke (22) ausgebildete Kontur ist, welche an den mit der Zahnung des Ratschenrades (5) zusammenwirkenden Klinkenvorsprung (27) der Sperrklinke (22) angrenzt.

8. Ratschenanordnung nach einem der vorangehenden Ansprüche, **dadurch gekennzeichnet, dass** der Riegel (10) längsbeweglich an dem Handhebel (2) gelagert ist.

9. Ratschenanordnung nach einem der vorangehenden Ansprüche, **gekennzeichnet durch** Wegbegrenzungsmittel (32; 31, 36), welche bei geschlossenem Handhebel (2) eine Bewegung des Riegels (10) in seine Freilaufstellung blockieren.

10. Ratschenanordnung nach Anspruch 9, **dadurch gekennzeichnet, dass** die Wegbegrenzungsmittel aus einem Anschlag (32) an der Sperrklinke (22) und einem Gegenanschlag (31, 36) an dem Riegel (10) bestehen.

11. Ratschenanordnung nach einem der vorangehenden Ansprüche, **gekennzeichnet durch** Rückhaltemittel (32, 31), welche den Riegel (10) bei geschlossenem Handhebel (2) in seiner Freilaufstellung blockieren.

12. Ratschenanordnung nach Anspruch 11, **dadurch gekennzeichnet, dass** die Rückhaltemittel aus sich in Bewegungsrichtung des Riegels (10) gegenseitig hintergreifenden Vorsprüngen (32, 31) an Sperrklinke (22) und Riegel (10) bestehen.

13. Ratschenanordnung nach einem der vorangehenden Ansprüche, **dadurch gekennzeichnet, dass** der Riegel (10) zur Verriegelung des Handhebels (2) mit einem eine Sperrfläche (19) des Basisteils (1) hintergreifenden Sperrhaken (18) versehen ist, und dass der Sperrhaken (18) der Sperrfläche (19) abgewandt mit einer Einführschräge (20) versehen ist.

14. Ratschenanordnung nach einem der vorangehenden Ansprüche, **gekennzeichnet durch** eine in dem Handhebel (2) nahe eines daran ausgebildeten Handgriffs (3) angeordnete Betätigungstaste (4) für den Riegel (10).

15. Ratschenanordnung nach Anspruch 14, **dadurch gekennzeichnet, dass** die Betätigungstaste (4) schwenkbeweglich mit dem Riegel (10) verbunden und zugleich an dem Handhebel (2) längsgeführt ist.

## Claims

1. A ratchet device for tensioning articles capable of being wound up, with a base part (1) supporting a toothed ratchet wheel (5) in a rotatable manner, a manual lever (2) mounted on the same axis of rotation (A) as the ratchet wheel (5) so as to be pivotable with respect to the base part (1), a catch mechanism adapted to the teeth of the ratchet wheel (5) and comprising an entrainment catch (21) on the manual lever (2) and a locking catch (22) on the base part (1), and a bolt (10) which is mounted on the manual lever (2) so as to be movable between a normal position and at least one unlocking position and which locks the manual lever (2) on the base part (1) in a positively locking manner in the normal position and releases it in the unlocking position, **characterized in that**, in addition to the normal and unlocking positions, the bolt (10) is designed to be movable into a neutral position in which a thrust element (33) formed on the bolt (10) holds the locking catch (22) out of engagement in the ratchet wheel (5).

2. A ratchet device according to Claim 1, **characterized in that** in the neutral position the thrust element (33) of the bolt (10) also holds the entrainment catch (21) out of engagement in the ratchet wheel (5).

3. A ratchet device according to Claim 1 or 2, **characterized in that** in the neutral position the thrust element (33) presses directly against the locking catch (22) and thus holds the latter out of engagement in the ratchet wheel (5).

4. A ratchet device according to Claim 1 or 2, **characterized in that** in the neutral position the thrust element (33) presses against the entrainment catch (21), which with the entrainment of the locking catch (22) is in turn movable against the locking catch (22) and thus holds the latter out of engagement in the ratchet wheel (5).

5. A ratchet device according to any one of the preceding Claims, **characterized in that** the locking catch (22) is mounted in a pivotably movable manner on the base part (1), and the entrainment catch (21) is mounted in a pivotably movable manner on the manual lever (2).

6. A ratchet device according to any one of the preceding Claims, **characterized by** an entrainment element which is formed on one of the two catches (22, 21) and which in the out-of-engagement position of one catch (22 or 21 respectively) also holds the other catch (21 or 22 respectively) out of engagement in the ratchet wheel (5).

7. A ratchet device according to Claim 6, **characterized in that** the entrainment element (29) is a contour which is formed on the locking catch (22) and which adjoins the catch projection (27) of the locking catch (22) co-operating with the teeth of the ratchet wheel (5).

8. A ratchet device according to any one of the preceding Claims, **characterized in that** the bolt (10) is mounted so as to be movable longitudinally on the manual lever (2).

9. A ratchet device according to any one of the preceding Claims, **characterized by** path limitation means (32; 31, 36) which when the manual lever (2) is closed block a movement of the bolt (10) into its neutral position.

10. A ratchet device according to Claim 9, **characterized in that** the path limitation means comprise a stop (32) on the locking catch (22) and a counter stop (31, 36) on the bolt (10).

11. A ratchet device according to any one of the preceding Claims, **characterized by** retention means (32, 31) which block the bolt (10) in the neutral position thereof when the manual lever (2) is closed.

12. A ratchet device according to Claim 11, **characterized in that** the retention means comprise projections (32, 31) - engaging one behind the other in the direction of movement of the bolt (10) - on the locking catch (22) and the bolt (10).

13. A ratchet device according to any one of the preceding Claims, **characterized in that** the bolt (10) is provided for locking the manual lever (2) with a locking hook (18) which engages behind a locking face (19) of the base part (1), and the locking hook (18) is provided with an insertion slope (20) facing away from the locking face (19).

14. A ratchet device according to any one of the preceding Claims, **characterized by** an actuating button (4) arranged in the manual lever (2) in the vicinity of the handle (3) mounted thereon for the bolt (10).

15. A ratchet device according to Claim 14, **characterized in that** the actuating button (4) is connected to the bolt (10) in a pivotably movable manner and at the same time is guided longitudinally on the manual lever (2).

## Revendications

1. Dispositif à rochet pour étirer des objets pouvant être enroulés, comprenant une partie de base (1) supportant en rotation une roue à rochet dentée (5), un levier manuel (2) monté de façon pivotante par rapport à la partie de base (1) sur le même axe de rotation (A) que la roue à rochet (5), un mécanisme à cliquets adapté à la denture de la roue à rochet (5) constitué d'un cliquet d'entraînement (21) sur le levier manuel (2) et d'un cliquet d'arrêt (22) sur la partie de base (1), et un verrou (10) monté sur le levier manuel (2) de façon à pouvoir être déplacé entre une position de base et au moins une position de déverrouillage qui verrouille le levier manuel (2) dans la position de base par liaison mécanique avec la partie de base (1) et le libère dans la position de déverrouillage,
**caractérisé**
**en ce que** le verrou (10) est réalisé de façon à pouvoir être déplacé, en plus de la positon de base et de déverrouillage, dans une position de roue libre dans laquelle un élément de pression (33) réalisé sur le verrou (10) maintient le cliquet d'arrêt (22) hors de prise dans la roue à rochet (5).

2. Dispositif à rochet selon la revendication 1, **caractérisé en ce que** dans la position de roue libre, l'élément de pression (33) du verrou (10) maintient également le cliquet d'entraînement (21) hors de prise dans la roue à rochet (5).

3. Dispositif à rochet selon la revendication 1 ou 2, **caractérisé en ce que** dans la position de roue libre, l'élément de pression (33) appuie directement contre le cliquet d'arrêt (22) et maintient ainsi celui-ci hors de prise dans la roue à rochet (5).

4. Dispositif à rochet selon la revendication 1 ou 2, **caractérisé en ce que** dans la position de roue libre, l'élément de pression (33) appuie contre le cliquet d'entraînement (21), qui peut pour sa part être déplacé en entraînant le cliquet d'arrêt (22) contre le cliquet d'arrêt (22), et maintient ainsi celui-ci hors de prise dans la roue à rochet (5).

5. Dispositif à rochet selon l'une des revendications précédentes, **caractérisé en ce que** le cliquet d'arrêt (22) est monté de façon à pouvoir être déplacé par pivotement sur la partie de base (1), et le cliquet d'entraînement (21), de façon à pouvoir être déplacé par pivotement sur le levier manuel (2).

6. Dispositif à rochet selon l'une des revendications précédentes, **caractérisé par** un élément de prise réalisé sur l'un des deux cliquets (22, 21), qui dans la position hors de prise de ce cliquet (22 ou 21), maintient également l'autre cliquet (21 ou 22) hors de prise dans la roue à rochet (5).

7. Dispositif à rochet selon la revendication 6, **caractérisé en ce que** l'élément de prise (29) est un contour réalisé sur le cliquet d'arrêt (22), qui est adjacent à la saillie de cliquet (27) du cliquet d'arrêt (22) coopérant avec la denture de la roue à rochet (5).

8. Dispositif à rochet selon l'une des revendications précédentes, **caractérisé en ce que** le verrou (10) est monté de façon à pouvoir être déplacé de façon longitudinale sur le levier manuel (2).

9. Dispositif à rochet selon l'une des revendications précédentes, **caractérisé par** des moyens de limitation de course (32 ; 31, 36), qui lorsque le levier manuel (2) est fermé, bloquent un déplacement du verrou (10) vers sa position de roue libre.

10. Dispositif à rochet selon la revendication 9, **caractérisé en ce que** les moyens de limitation de course sont constitués d'une butée (32) sur le cliquet d'arrêt (22) et d'une contre-butée (31, 36) sur le verrou (10).

11. Dispositif à rochet selon l'une des revendications précédentes, **caractérisé par** des moyens de retenue (32, 31), qui lorsque le levier manuel (2) est fermé, bloquent le verrou (10) dans sa position de roue libre.

12. Dispositif à rochet selon la revendication 11, **caractérisé en ce que** les moyens de retenue sont constitués de saillies (32, 31) sur le cliquet d'arrêt (22) et le verrou (10) qui se saisissent mutuellement par l'arrière dans le sens de déplacement du verrou (10).

13. Dispositif à rochet selon l'une des revendications précédentes, **caractérisé en ce que** le verrou (10), pour verrouiller le levier manuel (2), est pourvu d'un crochet d'arrêt (18) qui saisit par l'arrière une surface d'arrêt (19) de la partie de base (1) et **en ce que** le crochet d'arrêt (18) est pourvu en opposition à la surface d'arrêt (19) d'un biseau d'introduction (20).

14. Dispositif à rochet selon l'une des revendications précédentes, **caractérisé par** un bouton d'actionnement (4) pour le verrou (10) agencé dans le levier manuel (2) à proximité d'une poignée (3) réalisée sur celui-ci.

15. Dispositif à rochet selon la revendication 14, **caractérisé en ce que** le bouton d'actionnement (4) est relié avec le verrou (10) de façon à pouvoir être déplacé par pivotement, et en même temps, guidé de façon longitudinale sur le levier manuel (2).
